# EUROPÄISCHE PATENTANMELDUNG

(11) **EP 1 683 656 A1**
(43) Veröffentlichungstag der Anmeldung: **26.07.2006**
(21) Anmeldenummer: 05111938.6
(22) Anmeldetag: 12.12.2005
(51) Int. Cl.: B60C 17/00, B60C 15/00, B60C 15/06

(54) **Fahrzeugluftreifen**

(30) Priorität: 19.01.2005 DE 102005002402
(71) Anmelder: Continental Aktiengesellschaft, 30165 Hannover (DE)
(72) Erfinder: Kaiser, Silvia, 30659, Hannover (DE)

(57) **Zusammenfassung**

Die Erfindung betrifft einen Fahrzeugluftreifen in radialer Bauart mit einem profilierten Laufstreifen (1), einem insbesondere mehrlagigen Gürtelverband (2), einer Innenschicht (1), einer zumindest einlagig ausgeführten Karkasse (3), welche in Wulstbereichen (5) um Wulstkerne (6) unter Bildung eines Hochschlages (3a) geführt ist, Seitenwänden (7) und mit zumindest je einem im Bereich jeder Seitenwand (7) eingebrachten, im Querschnitt in etwa mondsichelförmigen Verstärkungsprofil. Erfindungsgemäß zeichnet sich der Fahrzeugluftreifen dadurch aus, dass das Verstärkungsprofil jeweils auf dem Wulstkern aufgesetzt ist, wobei sich das Verstärkungsprofil radial vom Wulstkern bis unterhalb des Gürtelverbandes erstreckt, und dass die Karkasse axial innen an der Innenseite des Verstärkungsprofils entlangläuft , wobei der Karkasshochschlag (3a) radial außerhalb der Wulstkerne (6) und axial außerhalb des Verstärkungsprofils in einer Höhe von in einer Höhe von wenigstens 15% der maximalen Querschnittshöhe (H) des Reifens um den Wulstkern (6) herumgeführt ist.

## Beschreibung

Die Erfindung betrifft einen Fahrzeugluftreifen in radialer Bauart mit einem profilierten Laufstreifen, einem insbesondere mehrlagigen Gürtelverband, einer Innenschicht, einer zumindest einlagig ausgeführten Karkasse, welche in Wulstbereichen um Wulstkerne unter Bildung eines Hochschlages geführt ist, Seitenwänden und mit zumindest je einem im Bereich jeder Seitenwand eingebrachten, im Querschnitt in etwa mondsichelförmigen Verstärkungsprofil.

Derartige, im Pannenfall selbsttragende Fahrzeugluftreifen, sind schon seit längerem bekannt. Die im Bereich der Seitenwände des Reifens eingebauten Verstärkungsprofile werden bezüglich ihrer Querschnittsform und bezüglich der Eigenschaften ihrer elastomeren Mischung derart ausgeführt, dass sie in der Lage sind, den Reifen bei einem plötzlichen Druckverlust, also im Pannenfall, auf eine gewisse Zeit bzw. über eine gewisse Laufleistung selbsttragend zu erhalten. Ein selbsttragender Reifen der eingangs genannten Art ist beispielsweise aus der DE 2 331 530 A bekannt. Die hier vorgesehenen elastomeren Verstärkungselemente weisen jeweils eine maximale Dicke von 4 mm bis 20 mm auf. Bei anderen bekannten Ausführungen besteht das die Selbsttragefähigkeit des Reifens gewährleistende Verstärkungsprofil aus mehreren Profilteilen unterschiedlicher Härten. Eine derartige Ausführung ist beispielsweise aus der DE 29 43 654 A bekannt.

Der Erfindung liegt die Aufgabe zu Grunde, einen Fahrzeugluftreifen der eingangs genannten Art zu optimieren, um im normalen Betrieb trotz Verstärkungsprofilen die Erwärmung gering zu halten, gute Komforteigenschaften sicher zu stellen und im Pannenfall die gewünschte Selbsttragefähigkeit des Reifens zu gewährleisten. Ferner soll ein derartiger Reifen einfach und preiswert herzustellen sein.

Gelöst wird die gestellte Aufgabe erfindungsgemäß dadurch, dass das Verstärkungsprofil jeweils auf dem Wulstkern aufgesetzt ist, wobei sich das Verstärkungsprofil radial vom Wulstkern bis unterhalb des Gürtelverbandes erstreckt, und das die Karkasse axial innen an der Innenseite des Verstärkungsprofils entlang läuft , wobei der Karkasshochschlag radial außerhalb der Wulstkerne und axial außerhalb des Verstärkungsprofils in einer Höhe von wenigstens 15% der maximalen Querschnittshöhe des Reifens um den Wulstkern herum geführt ist.

Gemäß der Erfindung sitzen also die Verstärkungsprofile mehr oder weniger direkt auf den Wulstkernen auf, wobei sie von der Karkasse zumindest teilweise umschlossen bzw. in dieser eingebettet sind. Bislang wurden die Verstärkungsprofile - auch herstellungsbedingt - axial innen an die Karkasse angelegt, so dass die Verstärkungsprofile außerhalb der Krakassumschlingung angeordnet waren. Der Wulstkern war bislang mit einem sogenannten Kernprofil oder Apex versehen; die Karkasse lief hier axial innen am Apex entlang, wurde um den Wulstkern herumgeführt und lief dann axial außen am Apex hoch. Nunmehr wird aber die Karkasse axial innen am Verstärkungsprofil entlang geführt, wobei das Verstärkungsprofil direkt auf dem Kern aufliegt.

Dies führt überraschenderweise zu einer Erhöhung der Stabilität des Verstärkungsprofils und damit des Fahrzeugreifens, wobei gleichzeitig die Komforteigenschaften verbessert werden. Auch im Herstellungsprozeß lassen sich mit der erfindungsgemäßen Konstruktion Vorteile erzielen. Abgesehen davon, dass auf einen separaten Wulstkern verzichtet werden kann, ist als Vorteil zu nennen, dass ein derartig ausgestalteter Reifen auf normalen Bautrommeln hergestellt werden kann, Bautrommeln also, die keine spezielle Taschen oder Ausnehmungen zum Auflegen der Verstärkungsprofile benötigen.

In praktischen Ausgestaltungen der Erfindung kann vorgesehen sein, das Verstärkungsprofil einstückig auszugestalten, oder, alternativ, das Verstärkungsprofil aus zwei Bauteilen zusammenzufügen, wobei praktischerweise vorgesehen sein kann, dass die zwei Bauteile des Verstärkungsprofils kongruente Keilflächen aufweisen, wobei die Keilflächen einen Winkel von 20 - 70° aufweisen.

Je nach gewünschter Eigenschaft kann also das Verstärkungsprofil integral mit dem Apex als einziges Bauteil extrudiert werden, woduch der sonst übliche Fertigungsschritt wegfällt, den Apex separat an den Wulst anzuformen. Wird die zwei- oder mehrteilige Ausführungsform gewählt, läßt sich das Apex-/Verstärkungsprofil-Bauteil in axialer oder radialer Richtung aus unterschiedlichen Stücken zusammensetzen und hierdurch die gewünschten Eigenschaften einstellen.

So kann gemäß vorteilhaften Ausgestaltungen der Erfindung vorgesehen sein, dass das Verstärkungsprofil aus einer einzigen Kautschukmischung besteht, wobei dann vorgesehen sein kann, dass das Verstärkungsprofil aus einer Kautschukmischung mit einer shore A - Härte von 65 - 80 besteht, oder entsprechend bei mehrteiliger Ausgestaltung des Verstärkungselementes, kann vorgesehen sein, dass das Verstärkungsprofil aus wenigstens zwei unterschiedlichen Kautschukmischungen besteht, wobei eine Mischung eine shore A - Härte von 60 - 70, und eine andere Mischung eine shore A - Härte von 70 - 80 aufweist.

Gemäß weiteren praktischen Ausgestaltungen kann desweiteren vorgesehen sein, dass sich der Hochschlag der Karkasse bis unterhalb des Gürtelverbandes erstreckt, dass das Verstärkungsprofil aus einer Kautschukmischung mit einem Anteil an Silica besteht, und dass sich der Hochschlag der Karkasse bis wenigstens 15 % der Höhe der Reifenseitenwand erstreckt, wobei eine separate Verstärkungslage ein freies axial außen angeordnetes Ende der Karkasse bedeckt und sich bis unterhalb des Gürtelverbandes erstreckt. Ebenso ist denkbar, dass axial außerhalb des Karkasshochschlages ein Zusatzprofil angeordnet ist, welches sich vorzugsweise bis auf eine Höhe von 25% bis 30% der maximalen Querschnittshöhe (H) des Reifens erstreckt.

Schließlich ist es auch möglich, dass die Härte des Zusatzprofils zumindest im Wesentlichen der Härte des Verstärkungsprofils entspricht, ferner, dass die maximale Dicke des Verstärkungsprofils 4mm bis 25 mm beträgt.

Im Rahmen praktischer Weiterbildungen liegt es auch, wenn axial außen an der Karkasse im Bereich des Wulstkernes ein Wulstverstärker angeordnet ist, welcher aus textilen oder metallischen Fäden besteht.

Ein besonderer Aspekt der Erfindung ist eine Karkasse, welche unterschiedliche Festigkeiten aufweist, wobei die Karkasse im axial inneren Bereich eine geringere Festigkeit aufweist, als axial außen.

Es kann ferner von Vorteil sein, axial außerhalb des Karkasshochschlages ein Zusatzprofil anzuordnen, welches sich vorzugsweise bis auf eine Höhe von 25% bis 30% der Querschnittshöhe des Reifens erstreckt. Das Zusatzprofil und das zugehörige Verstärkungsprofil können gemeinsam derart ausgelegt werden, dass die Seitenwände des Reifens bis auf eine Höhe von etwa 75% der maximalen Querschnittshöhe im Wesentlich konstant breit sind.

In einer weiteren Ausgestaltung der Erfindung kann vorgesehen sein, dass das Verstärkungsprofil aus drei radialen Teilprofilen besteht, wobei ein radial mittleres Teilprofil eine höhere shore A - Härte aufweist, als ein radial oberes und ein radial unteres Teilprofil. Beim Einknicken des Verstärkungsprofils unter Last übernimmt hierbei das mittlere Teilprofil eine zusätzliche Stützfunktion. Alternativ kann vorgesehen sein, dass das mittlere Teilprofil gegenüber den beiden anderen Teilprofilen weicher ist. Diese Ausgestaltung ist im nomalen Betrieb des Reifens mit einer Komfortverbesserung verbunden, da das weichere Teilprofil Schwingungen und Vibrationen abmildern kann.

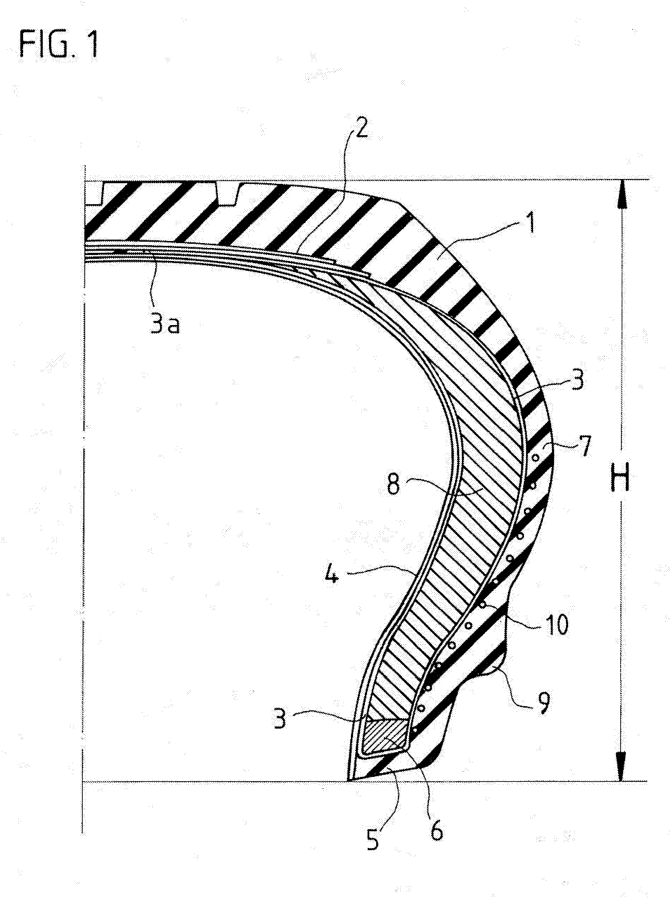

Weitere Merkmale, Vorteile und Einzelheiten der Erfindung werden nun anhand der Zeichnung, die schematisch ein Ausführungsbeispiel darstellt, näher beschrieben. Die einzige Zeichnungsfigur, Fig. 1, zeigt einen Querschnitt durch einen Radialreifen für Personenkraftwagen.

Fig. 1 zeigt einen erfindungsgemäß ausgeführten, selbsttragenden Reifen im Querschnitt als hälftige Ansicht. Dieser Reifen ist bei einem Druckverlust im Pannenfall in der Lage, zumindest über eine gewisse Laufleistung soweit tragfähig zu bleiben, dass eine Weiterfahrt möglich ist. Die wesentlichen Bauteile, aus welchen sich der Reifen zusammensetzt, sind ein profilierter Laufstreifen 1, ein beispielsweise zweilagig ausgeführter Gürtel 2, eine insbesondere einlagig, bei Reifen mit hoher Tragfähigkeit vorzugsweise zweilagig, ausgeführte Karkasse 3, eine luftdicht bzw. weitgehend luftdicht ausgeführte Innenschicht 4, Wülste 5 mit Wulstkernen 6, Seitenwände 7 und im Querschnitt etwa mondsichelförmige Verstärkungsprofile 8. Nahe der Wulstbereiche können die Seitenwände 7 umlaufend mit Felgenhornprofilen 9 versehen sein. In der Figur sind von diesen Bauteilen jeweils nur eines dargestellt.

Die beiden Lagen des Gürtels 2 können in bekannter Weise aus in eine Gummimischung eingebetteten Festigkeitsträgern, insbesondere aus Stahlcord, bestehen, welche innerhalb jeder Lage parallel zueinander verlaufen, wobei die Stahlcorde der einen Lage in kreuzender Anordnung zu den Stahlcorden der zweiten Lage orientiert sind und mit der Reifenumfangsrichtung jeweils einen Winkel zwischen 15 ° und 35 ° einschließen. Die Verstärkungsprofile 8 sind zwischen der Karkasse 3 und ihrem Lagenumschlag 3a angeordnet und verleihen dem Reifen bei Druckverlust die Selbsttragefähigkeit, so dass über einen gewissen Zeitraum und bei verminderter Geschwindigkeit eine Weiterfahrt möglich ist.

Die Karkasse 3 umläuft die Verstärkungsprofile 8 und die Wulstkerne 6 von innen nach außen und ist somit auf sich selbst rückgeführt, wobei der in Richtung Gürtel 2 verlaufende Abschnitt als Karkasshochschlag 3a bezeichnet wird und bei der dargestellten Ausführungsform unterhalb des Gürtels 2 endet.

Bei einer bevorzugten Ausführungsform der Erfindung wird der Reifen mit einem einteiligen Verstärkungsprofil aufgebaut. Bei üblichen Reifen sind radial außerhalb der Wulstkerne 6 Kernprofile zwischen der vom Gürtel 2 kommenden Karkasse 3 und dem Hochschlag 3a eingefügt. Beim Aufbau eines erfindungsgemäß ausgeführten Reifens kann die Karkasse 3 um die Wulstkerne 6 ohne Einlegen von Kernprofilen geführt werden, sodass die Hochschläge 3a bereits radial außerhalb der Wulstkerne 6 zur Karkasse 3 rückgeführt sind. Das sonst separate Kernprofil oder Apex ist integral mit dem Verstärkungsprofil 8 verbunden, welches direkt auf dem Wulstkern 6 aufsitzt.

Durch das Weglassen der ansonsten üblichen Kernprofile wird die Möglichkeit geschaffen, die Verstärkungsprofile 8 in Richtung zu den Wulstbereichen massiver auszuführen, ihre Gummimasse durch den Wegfall der Kernprofile entsprechend zu erhöhen. Die Verstärkungsprofile 8 reichen ferner neben den Wulstkernen 6 bis höchstens zum radial innersten Ende der Wulstkerne 6.

Alternativ zu der dargestellten einteiligen Ausführung des Verstärkungsprofils 8 kann sich dieses aus zwei oder mehr Profilteilen zusammensetzen, die jedes für sich etwa mondsichelförmig ausgeführt wird und gemeinsam zumindest im Wesentlichen die Querschnittsfläche eines einteiligen Verstärkungsprofils einnehmen, aber aus unterschiedlichen Gummimischungen bestehen. Der Vorteil einer einteiligen Ausführung eines Verstärkungsprofils ist eine einfachere optimale Auslegung desselben und die Möglichkeit, seine Masse optimal zu reduzieren. Denkbar ist auch, das Verstärkungsprofil aus radial geteilten Einzelbauteilen zusammen zu fügen, die dann kongruente Keilpaßflächen aufweisen können.

Wie die einzige Zeichnungsfigur zeigt, kann jeder Wulstbereich an seiner Außenseite und axial außerhalb des Hochschlages 3a mit einem Wulstverstärker 10, welches im Bereich neben den Wulstkernen 6 beginnend bis auf eine Höhe von vorzugsweise 25% bis 30% der maximalen Querschnittshöhe H des Reifens reicht, verstärkt werden. Der Wulstverstärker 10 wird dabei aus textilen oder metallischen Fäden als Cordbahn aufgelegt oder als Einzelfaden aufgespult.

Durch die Erfindung wird ein im Pannenfall selbsttragender Reifen geschaffen, welcher im Normalbetrieb weniger Hitze aufbaut als vergleichbare Reifen mit Verstärkungsprofilen. Ferner läßt er sich einfach herstellen, da normale Bautrommeln verwendet werden können.

### Bezugszeichenliste (Bestandteil der Beschreibung)

- 1: Laufstreifen
- 2: Gürtellage
- 3: Karkasse
- 3a: Karkassumschlag
- 4: Innenschicht
- 5: Wulst
- 6: Wulstkern
- 7: Seitenwand
- 8: Verstärkungsprofil
- 9: Felgenhornprofil
- 10: Wulstverstärker

- H: Querschnittshöhe des Reifens

## Patentansprüche

1. Fahrzeugluftreifen in radialer Bauart mit einem profilierten Laufstreifen, einem insbesondere mehrlagigen Gürtelverband, einer Innenschicht, einer zumindest einlagig ausgeführten Karkasse, welche in Wulstbereichen um Wulstkerne unter Bildung eines Hochschlages geführt ist, Seitenwänden und mit zumindest je einem im Bereich jeder Seitenwand eingebrachten, im Querschnitt in etwa mondsichelförmigen Verstärkungsprofil,
**dadurch gekennzeichnet, dass**
das Verstärkungsprofil (8) jeweils auf dem Wulstkern (6) aufgesetzt ist, wobei sich das Verstärkungsprofil (8) radial vom Wulstkern (6) bis unterhalb des Gürtelverbandes (2) erstreckt, und das die Karkasse (3) axial innen an der Innenseite des Verstärkungsprofils (8) entlang läuft , wobei der Karakasshochschlag (3a) radial außerhalb der Wulstkerne (6) und axial außerhalb des Verstärkungsprofils (8) in einer Höhe von wenigstens 15% der maximalen Querschnittshöhe (H) des Reifens um den Wulstkern (6) herum geführt ist.

2. Fahrzeugluftreifen nach Anspruch 1, **dadurch gekennzeichnet, dass** das Verstärkungsprofil (8) einstückig ist.

3. Fahrzeugluftreifen nach Anspruch 1 oder 2, **dadurch gekennzeichnet, dass** das Verstärkungsprofil (8) aus zwei Bauteilen zusammengefügt ist.

4. Fahrzeugluftreifen nach Anspruch 3, **dadurch gekennzeichnet, dass** die zwei Bauteile des Verstärkungsprofils (8) kongruente Keilflächen aufweisen, wobei die Keilflächen einen Winkel von 20 - 70° aufweisen.

5. Fahrzeugluftreifen nach wenigstens einem der Ansprüche 1 bis 4, **dadurch gekennzeichnet, dass** das Verstärkungsprofil (8) aus einer einzigen Kautschukmischung besteht.

6. Fahrzeugluftreifen nach Anspruch 5, **dadurch gekennzeichnet, dass** das Verstärkungsprofil (8) aus einer Kautschukmischung mit einer shore A - Härte von 65 - 80 besteht.

7. Fahrzeugluftreifen nach wenigstens einem der Ansprüche 1 bis 4, **dadurch gekennzeichnet, dass** das Verstärkungsprofil (8) aus wenigstens zwei unterschiedlichen Kautschukmischungen besteht, wobei eine Mischung eine shore A - Härte von 60 - 70, und eine andere Mischung eine shore A - Härte von 70 - 80 aufweist.

8. Fahrzeugluftreifen nach wenigstens einem der Ansprüche 1 bis 7 **dadurch gekennzeichnet, dass** sich der Hochschlag (3a) der Karkasse (3) bis mindestens unterhalb des Gürtelverbandes (2) erstreckt.

9. Fahrzeugluftreifen nach einem der Ansprüche 1 bis 8, **dadurch gekennzeichnet, dass** das Verstärkungsprofil (8) aus einer Kautschukmischung mit einem Anteil an Silica besteht.

10. Fahrzeugluftreifen nach wenigstens einem der Ansprüche 1 bis 9, **dadurch gekennzeichnet, dass** sich der Hochschlag (3a) der Karkasse (3) bis wenigstens 15 % der Höhe der Reifenseitenwand (7) erstreckt, wobei eine separate Verstärkungslage ein freies axial außen angeordnetes Ende der Karkasse bedeckt und sich mindestens bis unterhalb des Gürtelverbandes (2) erstreckt.

11. Fahrzeugluftreifen nach wenigstens einem der Ansprüche 1 bis 10, **dadurch gekennzeichnet, dass** axial außerhalb des Karkasshochschlages (3a) ein Zusatzprofil angeordnet ist, welches sich vorzugsweise bis auf eine Höhe von 25% bis 30% der maximalen Querschnittshöhe (H) des Reifens erstreckt.

12. Fahrzeugluftreifen nach einem der Ansprüche 1 bis 11, **dadurch gekennzeichnet, dass** die Härte des Zusatzprofils zumindest im Wesentlichen der Härte des Verstärkungsprofils (8) entspricht.

13. Fahrzeugluftreifen nach einem der Ansprüche 1 bis 12, **dadurch gekennzeichnet, dass** die Dicke des Verstärkungsprofils (8) 4 mm bis 25 mm beträgt.

14. Fahrzeugluftreifen nach einem der Ansprüche 1 bis 13, **dadurch gekennzeichnet, dass** axial außen an der Karkasse (3) im Bereich des Wulstkernes (6) ein Wulstverstärker (10) angeordent ist, welcher aus textilen oder metallischen Fäden besteht.

15. Fahrzeugluftreifen nach einem der Ansprüche 1 bis 14, **dadurch gekennzeichnet, dass** die Karkasse (3) unterschiedliche Festigkeiten aufweist, wobei die Karkasse (3) im axial inneren Bereich eine geringere Festigkeit aufweist, als axial außen.

16. Fahrzeugluftreifen nach wenigstens einem der vorangegangenen Ansprüche, **dadurch gekennzeichnet, dass** das Verstärkungsprofil (8) aus drei radialen Teilprofilen besteht, wobei ein radial mittleres Teilprofil eine höhere shore A - Härte aufweist, als ein radial oberes und ein radial unteres Teilprofil.

17. Fahrzeugluftreifen nach wenigstens einem der vorangegangenen Ansprüche, **dadurch gekennzeichnet, dass** das Verstärkungsprofil (8) aus drei radialen Teilprofilen besteht, wobei ein radial mittleres Teilprofil eine geringere shore A - Härte aufweist, als ein radial oberes und ein radial unteres Teilprofil.
